# EUROPEAN PATENT APPLICATION

(11) **EP 4 464 391 A1**
(43) Date of publication of application: **20.11.2024**
(21) Application number: 24173689.1
(22) Date of filing: 01.05.2024
(51) Int. Cl.: B01D 1/28, C02F 1/04

(54) **DISCRETE VAPOR COMPRESSION DISTILLATION URINE PROCESSOR ASSEMBLY AND METHOD OF USE THEREOF**

(30) Priority: 15.05.2023 US 202318317604
(71) Applicant: Hamilton Sundstrand Space Systems International, Inc., Windsor Locks, CT 06096 (US)
(72) Inventor: SCHUSTER, Ashley Rose Himmelmann, Chicago (US); MUGURUSA, Diego S., North Haven (US)
(74) Representative: Dehns

(57) **Abstract**

A vapor compression distillation urine processor assembly (100) including a pump (105), a first phase separating apparatus (113), a compressor (116), and a second phase separating apparatus (122). Further detailed is a method of processing urine using a vapor compression distillation urine processor assembly (100).

## Description

### TECHNICAL FIELD

Disclosed herein is a discrete vapor compression distillation urine processor assembly and method of use thereof.

### BACKGROUND

Space exploration and activities depend on the development of technologies to accommodate long term human habitation in space. Current restraints on space-adapted technologies include limited space, limited storage, and difficulties associated with high complexity equipment.

One of the considerable costs to sustain life in space is the resupply of consumables. These consumables include supplies for equipment maintenance and repair and sustainable food and water sources. A particularly challenging problem is launch of sufficient water to supplement water loss due to humidity loss, oxygen generation, and human waste.

An astronaut produces an average of 1.4 kilograms of water from urine per day. Recapture of water from urine presents an opportunity for substantial cost savings. However, existing urine processor assemblies are technically complex, unfamiliar to potential developers/suppliers, and entail high costs of implementation.

Therefore, the need remains for an efficient, lower cost urine processor assembly.

### SUMMARY

According to an aspect of the invention, a vapor compression distillation urine processor assembly comprises a first collection tank, a first separating apparatus, a compressor and a storage tank. The first collection tank is operative to collect urine. The first separating apparatus lies downstream of the first collection tank and comprises a first separator, at least one pump and a second collection tank. The first separator is operative to separate urine into water vapor and brine. The at least one pump is in fluid communication with the first separator. The second collection tank is operative to store the brine discharged from the first separator. The compressor lies downstream of the first separating apparatus and is operative to compress water vapor. The storage tank that is operative to store water discharged from the compressor. The water is obtained from compressed water vapor.

In one aspect, the assembly further comprises a second separator. The second separator lies downstream of the compressor and upstream of the storage tank.

In another aspect, the at least one pump is integrated into the first separator.

In yet another aspect, a heat exchanger is disposed downstream of the first collection tank and in fluid communication with it. The heat exchanger is operative to heat urine with heat generated by a compression of water vapor. The first separating apparatus lies downstream of the heat exchanger.

In yet another aspect, the assembly comprises a second pump that lies downstream of the first collection tank and upstream of the heat exchanger.

In yet another aspect, the first separator is a rotary separator, a membrane separator or an inertial separator.

In yet another aspect, the assembly comprises a condenser; where the condenser lies downstream of the heat exchanger and upstream of the storage tank.

In yet another aspect, the second separator is a rotary separator, a membrane separator or an inertial separator.

In yet another aspect, the first separator, the at least one pump and the second collection tank are arranged in a recycle loop.

In yet another aspect, the first separating apparatus further comprises a filter and a second storage tank.

In yet another aspect, the first separator is a rotary separator.

In yet another aspect, the second separator is a membrane separator.

According to an aspect of the invention, a method of processing urine using a vapor compression distillation urine processor assembly comprises introducing urine into the assembly. The urine is pumped through a first separator that separates the urine into brine and a mixture of water vapor and gas. The brine is pumped from the first separator through a filter. The mixture of water vapor and gas from the first separator is discharged through a compressor where the mixture of water vapor and gas is compressed. The mixture of water vapor and gas is discharged to a second separator; where the second separator is operative to separate water from the gas. The water is obtained from compressed water vapor.

In an aspect, the water discharged from the second separator is stored in a storage tank.

In another aspect, the gas discharged from the second separator is vented to the environment or stored for further processing.

In yet another aspect, the first separator brings about separation of the brine from the mixture of water vapor and gas via phase separation.

In yet another aspect, the second separator brings about separation of the water vapor from gas via filtration or membrane separation.

In yet another aspect, the urine is passed through a heat exchanger before pumping the urine through a first separator, wherein the compressed mixture of water vapor and gas is discharged through the heat exchanger prior to being charged to the second separator.

In yet another aspect, the urine is heated in the heat exchanger via heat obtained from the compressed mixture of water, water vapor and gas.

The above described and other features are exemplified by the following figure and detailed description.

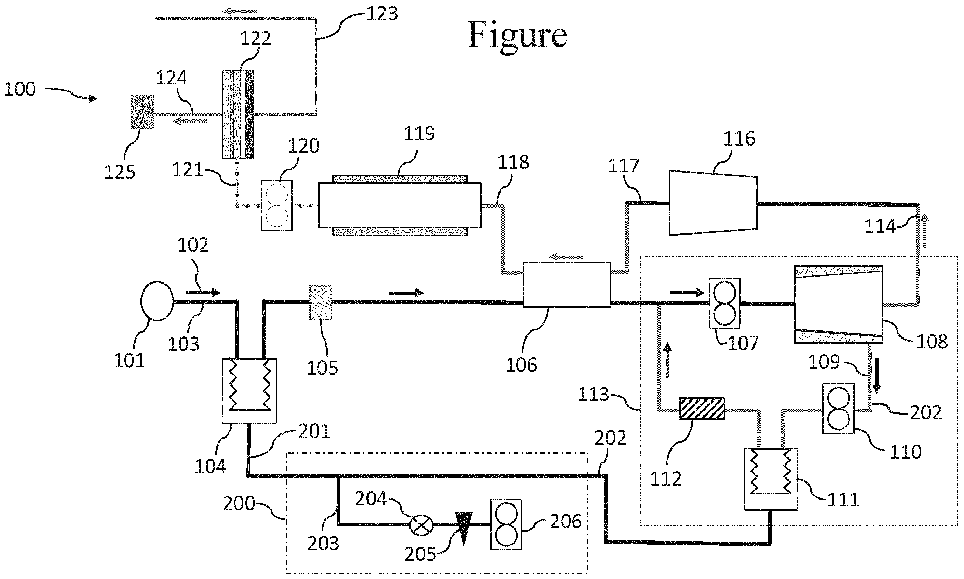

### BRIEF DESCRIPTION OF THE DRAWING

Referring now to the Figure, which is an exemplary embodiment, and wherein the like elements are numbered alike.

The Figure is a schematic of an embodiment of an exemplary discrete vapor compression urine processor assembly.

### DETAILED DESCRIPTION

Disclosed herein is a vapor compression distillation urine processor assembly that processes urine for re-use. The urine processor assembly provides a functional system under demanding environmental conditions including microgravity or zero gravity environments. The assembly discretizes the functions of the vapor compression distillation cycle into individual components comprising a phase separating loop and compression functionality.

The streamlined design of the assembly comprises a storage tank for urine storage before processing. The urine is then discharged from the storage tank through an optional heat exchanger into a phase separating apparatus. During phase separation, the water is evaporated and a concentrated brine solution is discharged into a collection assembly and can be recirculated through the phase separating apparatus as desired to increase efficiency of the water extraction process. The evaporated water and non-condensable gases from phase separation are charged to a compressor. The liquid/gas mixture is then discharged through the optional heat exchanger to a condenser where residual water vapor is condensed to liquid water. The condensed water and gases are pumped out of the condenser into a second phase separator. The resultant gas is vented or stored for later processing and the water is delivered to storage or a water processor.

"Brine," as used herein, refers to mixtures and solutions of salts and water.

"Product fluid" refers to water, water vapor, or a combination thereof. The product fluid is devoid of salts or oils present in urine.

"Subambient pressure," as used herein, refers to pressure less than the pressure of a surrounding environment.

"And/or" as used herein means "and" or "or."

"Microgravity" as used here means near weightless of approximately 1/1,000,000 of Earth's gravity.

"Urine" as used herein refers to untreated and/or treated urine.

The figure depicts an exemplary vapor compression distillation urine processor assembly 100 (hereinafter assembly 100) that comprises a urine inlet 101, a storage tank 104, an optional heat exchanger 106, a first phase separating apparatus 113, a compressor 116, and a second phase separating apparatus 122. In certain embodiments, the urine inlet 101 lies upstream of the heat exchanger 106 and is in fluid communication with it. Disposed between the inlet 101 and the heat exchanger 106 is a storage tank 104 and an optional first pump 105. The first pump 105 facilitates the transportation of urine from the inlet 101 to the heat exchanger 106. The heat exchanger 106 heats up urine that is to be charged to the first separating apparatus 113. The heat exchanger 106 exchanges heat between a heated product fluid (water, water-vapor, or a combination thereof) received from a compressor 116 and urine that is to be treated in the first separating apparatus 113. Urine is transported from inlet 101 to the first separating apparatus via stream 103.

Within the assembly 100, the heat exchanger 106 is in fluid communication with a first separating apparatus 113. The first separating apparatus 113 facilitates the separation of the urine into brine and water or brine and water-vapor.

The first separating apparatus 113 comprises an optional second pump 107, a first separator 108, an optional third pump 110, a second collection tank 111 and a filter 112. In one embodiment, at least one of the second pump 107 or the third pump 110 are present in the separating apparatus 113.

In an alternative embodiment, the first separating apparatus 113 can comprise no pumps. In an embodiment, the first separator 108 can integrate a pumping function.

In an embodiment, the first separator 108 lies downstream of the second pump 107 and upstream of the third pump 110. The second collection tank 111 and the filter 112 lie downstream of the separator 108. Fluid emanating from the separator 108 is transported to the pump 110, storage tank 111 and filter 112 via stream 109.

In an embodiment, the second pump 107, the first separator 108, the third pump 110, the second collection tank 111 and the filter 112 can lie in a recycle loop 202. A recycle loop is one where each component of the loop can be both upstream and downstream of any other component in the loop. For example, the first separator 108 is both upstream and downstream of the filter 112 because fluid discharged from the first separator 108 is fed to the filter 112, while at the same time fluid discharged by the filter 112 is fed to the first separator 108. For increased extraction of water from the brine, the brine can be re-cycled through the first separating apparatus within the recycle loop. A portion of the product fluid can be continuously removed downstream of the first separator 108 from the recycle loop and charged to the compressor 116 via stream 114.

Product fluid discharged from the first separating apparatus 113 is transported to the compressor 116 via stream 114 where it is compressed. The compression results in a temperature and pressure increase in the product fluid. The compressed heated product fluid is transported from the compressor 116 to heat exchanger 106 via streams 117. Heat generated in the product fluid during compression is exchanged with incoming urine in the heat exchanger 106. This heat exchange improves the efficiency of the assembly 100. The heated compressed product fluid after exchanging its heat in the heat exchanger 106 is discharged to a condenser 119 via stream 118.

Downstream of the heat exchanger 106 lies a condenser 119, a second separating apparatus 122 and a storage unit 125. The condenser 119 lies upstream of the second separating apparatus 122, which lies upstream of the storage unit 125. An optional fourth pump 120 can be located downstream of the heat exchanger 106. In some embodiments, the heat exchanger 106 is optional and the condenser 119 lies directly downstream of the compressor 116. The condenser 119 cools the product fluid so that it exists primarily in liquid form (i.e., liquid water). The liquid water can be discharged from pump 120 to the second separator 122 via stream 121 and into the storage unit 125 via stream 121. The second separator 122, fourth pump 120, and condenser 119 can be combined within a single unit if desired. In some embodiments, the second separator 122, fourth pump 120, and condenser 119 can be enclosed together in a housing.

A vacuum apparatus 200 can be in fluid connection with a gas side of the collection tank 104 and/or collection tank 111 to provide sub-ambient pressure within the assembly 100. The gas side of the collection tank 104 can be in fluid connection with the vacuum apparatus 200 via stream 201. The gas side is opposed to the liquid side of the collection tank. In the case of collection tank 104, the liquid side is the side at which stream 103 contacts the tank 104, while the gas side is the side at which stream 201 contacts the tank 104. The gas side of the collection tank 111 can be in fluid connection with the vacuum apparatus 200 via stream 202. In some embodiments, the vacuum apparatus 200 may be in fluid connection with both collection tank 104 and collection tank 111. In some embodiments, the vacuum apparatus 200 may be in fluid connection with one of collection tank 104 and collection tank 111. In other embodiments, collection tank 104 and collection tank 111 may each be in fluid connection with a different vacuum apparatus.

The vacuum apparatus 200 comprises an isolation valve 204 and an optional vacuum pump 206. The isolation valve 204 is upstream of the vacuum pump 206. In some embodiments, the vacuum pump 206 may be excluded from the vacuum apparatus. The stream 203 may be subj ected to a vacuum by virtue of being exposed to the vacuum of outer space. In order to do this, isolation valve 204 and restrictor 205 would be left in an "open" position.

In alternative embodiments, a flow restrictor 205 can be downstream of the isolation valve 204 and upstream of the vacuum pump 206. The use of vacuum apparatus 200 to provide sub-ambient pressure can reduce the saturation temperature of the urine, which reduces the power used for phase separation.

The collection tanks 104 and 111 can be the same or different. The collection tanks 104 and 111 can be pressure-controlled storage tanks, such as bellows tanks, bladder tanks, or diaphragm tanks. In some embodiments, the collection tanks can be a tank enclosed in a housing to prevent fluid escape. During storage and/or before entry of the urine via stream 103, the urine can be chilled via mechanical refrigeration or other suitable cooling techniques. In some embodiments, the collection tank 104 includes absorptive beds and other materials for stabilization and storage of the urine. In some embodiments, the collection tank 104 and/or storage tank 111 can be pressurized above the operating pressure of the system to drive fluid into the system. In an alternative embodiment, the collection tank 111 can contain suitable absorbents such as ion exchange resins to facilitate removal of salt from the urine and brine.

The streams 103, 109, 114, 117, 118, 121, 123, and 124 that transport urine, brine and product fluids (water, water-vapor, or a combination thereof) comprise conduits that contain stainless steel, titanium, nickel-chromium-molybdenum alloys, titanium alloys, fluoropolymers, and the like, or a combination thereof. Suitable fluoropolymers include polytetrafluoroethylene, perfluoroalkoxy alkanes (PFA), fluorinated ethylene propylene (FEP), polyaryletherketone polymers, chlorofluoropolymers, and fluorocarbon rubbers. In some embodiments the streams 103, 109, 114, 117, 118, 121, 123, and 124 can comprise the same materials or different materials. The conduits can withstand pressures of zero to about 300 kilopascal (kPa), of about zero to about 200 kPa, of about zero to about 150 kPa. The flow rate of the urine, brine and product fluids through the conduits can be up to approximately 15 milliliters per minute (mL/min), up to approximately 13 mL/min, up to about 5 mL/min.

The streams 201, 202 and 203 (that facilitate the transportation of urine, brine and product fluids (water, water-vapor, or a combination thereof) through the assembly) comprise conduits that contain stainless steel, titanium, nickel-chromium-molybdenum alloys, titanium alloys, fluoropolymers, and the like, or a combination thereof. Suitable fluoropolymers include polytetrafluoroethylene, perfluoroalkoxy alkanes (PFA), fluorinated ethylene propylene (FEP), polyaryletherketone polymers, chlorofluoropolymers, and fluorocarbon rubbers. In some embodiments the streams 201, 202 and 203 can comprise the same materials or different materials.

The urine flows through a heat exchanger 106 and is heated by heat generated from the compressed product fluid discharged from compressor 116. The heat exchanger 106 increases efficiency of the separation process by pre-heating the urine close to saturation temperature before discharge into the first separator 108. The heat exchanger 106 can be a regenerative or a recuperative heat exchanger where the urine absorbs the heat of the water vapor, liquid water and gas mixture discharged from the compressor. The heat exchanger can be a parallel flow heat exchanger, a counter flow heat exchanger, or a cross-flow heat exchanger. In some embodiments, the heat exchanger 106 is optional within the assembly 100.

As noted above, the assembly 100 comprises a plurality of pumps - first optional pump 105, second optional pump 107, third optional pump 109 and fourth optional pump 120. In an embodiment, the first separating apparatus 113 comprises at least one pump and the second separator 122 comprises at least one pump. Pumps used throughout the urine processor assembly can differ in design and type based on the area of use within the assembly 100. Suitable pumps include bellow pumps, diaphragm pumps, peristaltic pumps, scroll pumps and gear pumps. In an embodiment, the pumps are peristaltic pumps. In an embodiment, the second pump 107 can be optionally integrated into the heat exchanger 106 and/or moved upstream of the heat exchanger 106. In some embodiments, the pump 107 is located downstream of the heat exchanger 106.

The first separator 108 and the second separator 122 can be the same type or different. The separators can be rotary separators, membrane separators, inertial separators, or any separator suitable for separation of brine from water and/or water vapor in microgravity to zero gravity conditions. In alternative embodiments, the separators can be gravity-based separators. When the first separator 108 or the second separator 122 is a rotary separator, separation occurs via the imposition of rotational inertia imposed on the fluids and their relative densities. The rotary separator provides phase separation during rotation under reduced pressure and/or while heat is added to the urine (i.e., the temperature is increased). Membrane separators can separate water from gases via a screen or a membrane with hydrophobic or hydrophilic properties. In alternative embodiments, the first separator 108 is a rotary separator with integrated heaters to simultaneously boil and separate the urine/brine from the water vapor. In one embodiment, a heater integrated into the first separator 108 and/or a preheater upstream of the first separator 108 receives heat via electric-powered heaters. In another embodiment, the preheater upstream of the first separator 108 is a recuperative heat exchanger 106. The first separator 108 can perform both the function of boiling the urine and the function of separating the liquid urine and water vapor. In one embodiment, the first separator 108 is a rotary separator, while the second separator 122 is a membrane separator.

The filter 112 can be located upstream or downstream of the brine collection tank 111 as shown in the figure. In some embodiments, the filter can be integrated into the brine collection tank 111. In alternative embodiments, multiple filters can be present in the phase separating loop. For example, a coarse filter (e.g., 100 micrometers pore size) can be used upstream of a less coarse filter (e.g., 10 micrometers pore size). The filter 112 can comprise internal mesh elements sized to the desired pore size. The internal mesh of the filter 112 can comprise stainless steel, titanium, polytetrafluoroethylene, or a combination thereof. In another embodiment, the filtrate from filtering the brine can be re-cycled through the separator 108 to increase the overall yield of water from the urine. In an alternative embodiment, the filter 112 can comprise suitable absorbents such as ion exchange resins to facilitate removal of salt from the urine and brine.

As shown in the figure, the assembly 100 can intake urine directly for processing or store the urine for later use. The flow of urine and its byproducts through the assembly 100 are indicated by arrows 102. Urine is taken into the system at an inlet 101 and transported via streams 103, 109, 114, 117, 118, 121, and so on, as described in detail below. The urine can be pre-treated prior to intake into the assembly 100 or added directly to the assembly 100. Suitable pretreatment methods can consist of treatment with oxidative processes (e.g., ozone) or treatment with chemicals including acid, hexavalent chromium, quaternary amines, and combinations thereof. Suitable acids for pretreatment include acetic, benzoic, citric, glycolic, hydrochloric, nitric, phosphoric, and sulfuric. In some embodiments, the pH of the urine can be adjusted to a pre-set level before processing.

Urine can be fed directly into the assembly 100 at inlet 101 and stored in a collection tank 104. In alternative embodiments, the assembly 100 can have an optional entry point 105 after the collection tank 104, such that the urine is processed directly through the assembly 100 without storage. In some embodiments, the inlet 101 can be via the various waste sources, such as direct incorporation to the universal commode system (space toilet). Pumps can be optionally placed before and/or after a collection tank 104.

In embodiments where the urine is stored before processing, the urine can be stored in the collection tank 104. When the urine is ready for processing, it is pumped through the heat exchanger 106, where it is heated by the product fluid discharged from the compressor 116. In an alternative embodiment, the heat exchanger 106 is omitted and the urine is discharged directly into the first separator 108. After passage through the heat exchanger 106, the urine enters the first separating apparatus 108, where it is separated into brine and water and/or water vapor.

The brine residue can be discharged into a collection tank 111 or can be filtered in filter 112 and re-cycled through the recycle loop of the first separating apparatus 113. The vapor and gases exiting the first separator 108 is discharged via stream 114 to the compressor 116. The vapor and non-condensable gases are compressed by the compressor 116 and pumped through the heat exchanger 106. After passage through the heat exchanger, the mixture of water, water vapor, and non-condensable gases pass through a condenser 119. The water and non-condensable gases are pumped via stream 121 to the second separator 122. The gas is vented out via stream 123 and the water is separated via stream 124. The water is then collected in a storage unit 125 or sent to further processing. As noted above, pumps can be used throughout the system to drive the flow of the materials.

The assembly 100 provides the capability to reduce water loss to urine. As each human produces approximately 1.4 kilogram of water per day, the costs to provide the equivalent replacement water will be reduced by implementation of this assembly. The assembly provides a vapor compression cycle with limited components to reduce system complexity and production costs. The assembly 100 can function in a microgravity environment and can collect greater than 90% of the water in crew member urine for processing and re-use. In some embodiments, the assembly 100 can be utilized in standard gravity to zero gravity conditions or environments with greater gravitational forces than standard gravity.

When the separator 108 is a rotary separator, the separation occurs via the imposition of rotational inertia imposed on the fluids and their relative densities. During the phase separation, water evaporates and urine is concentrated into a brine solution. The brine is pumped out of the first separator 108 into stream 109 via the third pump 110. In some embodiments, the pump 110 is integrated into the phase separating apparatus 108. In some embodiments, the brine is stored in a collection tank 111 before further processing. In some embodiments, the brine is partially separated in the collection tank to facilitate re-cycling of the liquids in the brine through the phase separating apparatus within the recycle loop 113. In this manner, the collection tank 111 can serve as a separating chamber for the liquid and solid components of the brine. The brine within the collection tank 111 can be separated by gravitational forces and/or filters.

After phase separation, the water vapor and other gases are discharged from the first separator 108 via stream 114. In some embodiments, the water vapor and other gases are driven from the first separator 108 by a pump. In some embodiments the pump can be integrated into the compressor 116. The compressor 116 can be a rotary lobe compressor, scroll compressor, or diaphragm compressor. The pressure reached by compression in the assembly can be about 100 kPa to about 300 kPa.

After compression, the water, water vapor and gas mixture are discharged via stream 117 into the heat exchanger 106 where they exchange heat with incoming urine. The addition of a heat exchanger improves the efficiency of the process by warming the urine stream 103 for phase separation and cooling the compressed water vapor stream 118.

After the water, water vapor, and gas mixture passes through the heat exchanger 106, the mixture flows via stream 118 into the condenser 119. The condenser 119 condenses the remaining water vapor to provide a water/gas mixture.

After passing through the condenser 119, the water/gas mixture is ready for phase separation. The mixture is pumped via stream 121 by pump 120 into another separating apparatus (the second separator 122). The separating apparatus 122 can be a membrane separator or a rotary separator. In some embodiments, the second separator 122 can integrate the pump 120 and the condenser 119 functionality in an individual apparatus.

After phase separation, the liquid water is discharged from the phase separating apparatus 122 via stream 124 and can be stored in a collection tank 125 or discharged through to further processing. In some embodiments, the water can be filtered before exiting the urine processor assembly 100 via stream 124.

After phase separation, the gases flow out of the phase separating apparatus 122 into stream 123 and are vented to the cabin, expelled from the cabin, are stored for later use, or undergo further processing. In an embodiment, the gases can be filtered before exiting the urine processor assembly 100.

The vapor compression urine processor urine processor assembly provides an efficient and lower cost urine processing assembly. Use of the vapor compression urine processor assembly provides collection of about 90% of water from urine. Furthermore, the assembly provides urine processing functionality with component simplification and a reduced number of components from existing urine processors to ease manufacturing and decrease production costs.

While the invention has been described with reference to a preferred embodiment, it will be understood by those skilled in the art that various changes can be made and equivalents can be substituted for elements thereof without departing from the scope of the invention. In addition, many modifications can be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.

## Claims

1. A vapor compression distillation urine processor assembly comprising:
a first collection tank that is operative to collect urine;
a first separating apparatus that lies downstream of the first collection tank, the first separating apparatus comprising:
a first separator; where the first separator is operative to separate urine into water vapor and brine;
at least one pump; where the at least one pump is in fluid communication with the first separator;
a second collection tank; wherein the second collection tank is operative to store the brine discharged from the first separator;
a compressor; where the compressor lies downstream of the first separating apparatus; where the compressor is operative to compress water vapor; and
a storage tank that is operative to store water discharged from the compressor; the water being derived from the compressed water vapor.

2. The assembly of claim 1, further comprising a second separator; where the second separator lies downstream of the compressor and upstream of the storage tank.

3. The assembly of claim 1 or 2, wherein the at least one pump is integrated into the first separator.

4. The assembly of any preceding claim, wherein a heat exchanger is disposed downstream of the first collection tank and in fluid communication with it; where the heat exchanger is operative to heat urine with heat generated by a compression of water vapor; and wherein the first separating apparatus lies downstream of the heat exchanger.

5. The assembly of any preceding claim, further comprising a second pump that lies downstream of the first collection tank and upstream of the heat exchanger, and/or
wherein the first separator is a rotary separator, a membrane separator or an inertial separator.

6. The assembly of any preceding claim, further comprising a condenser; where the condenser lies downstream of the heat exchanger and upstream of the storage tank.

7. The assembly of any of claims 2 to 6, wherein the second separator is a rotary separator, a membrane separator or an inertial separator.

8. The assembly of any preceding claim, wherein the first separator, the at least one pump and the second collection tank are arranged in a recycle loop, and/or
wherein the first separating apparatus further comprises a filter and a second storage tank.

9. The assembly of any preceding claim, wherein the first separator is a rotary separator.

10. The assembly of any of claims 2 to 9, wherein the second separator is a membrane separator.

11. A method of processing urine using a vapor compression distillation urine processor assembly comprising:
introducing urine into the assembly;
pumping the urine through a first separator;
separating the urine into brine and a mixture of water vapor and gas;
pumping the brine from the first separator through a filter;
discharging the mixture of water vapor and gas from the first separator through a compressor;
compressing the mixture of water vapor and gas in the compressor;
discharging the compressed mixture of water vapor and gas through a second separator; where the second separator is operative to separate water from the gas; the water being derived from the compressed water vapor.

12. The method of claim 11, wherein the water discharged from the second separator is stored in a storage tank, and/or
wherein the gas discharged from the second separator is vented to the environment or stored for further processing.

13. The method of claim 11 or 12, wherein the first separator brings about separation of the brine from the mixture of water vapor and gas via phase separation, and/or
wherein the second separator brings about separation of the water vapor from gas via filtration or membrane separation.

14. The method of any of claims 11 to 13, further comprising passing the urine through a heat exchanger before pumping the urine through a first separator, wherein the compressed mixture of water vapor and gas is discharged through the heat exchanger prior to being charged to the second separator.

15. The method of claim 14, further comprising heating the urine in the heat exchanger via heat obtained from the compressed mixture of water, water vapor and gas.
